# EUROPÄISCHE PATENTSCHRIFT

(11) **EP 3 512 053 B1**
(45) Veröffentlichungstag und Bekanntmachung des Hinweises auf die Patenterteilung: **14.10.2020**
(21) Anmeldenummer: 18020510.6
(22) Anmeldetag: 18.10.2018
(51) Int. Cl.: H01R 31/00, H01R 13/506, H01R 13/502, B60L 53/14, B60L 53/16

(54) **LADESTECKER FÜR ELEKTROAUTOS UND DESSEN HERSTELLUNG**
CHARGING PLUG FOR ELECTRIC CARS AND THEIR MANUFACTURE
PRISE DE RECHARGE POUR VOITURES ELECTRIQUES ET LEUR FABRICATION

(30) Priorität: 16.01.2018 DE 102018100831
(43) Veröffentlichungstag der Anmeldung: 17.07.2019
(73) Patentinhaber: Dr.Ing. h.c. F. Porsche Aktiengesellschaft, 70435 Stuttgart (DE)
(72) Erfinder: Götz, Stefan, 85659 Forstern (DE); Reber, Volker, 74544 Michelbach a. d. Bilz (DE); Rönfanz, Jari, 75417 Mühlacker (DE)

(56) Entgegenhaltungen:
- CN-A- 106 532 339
- CN-U- 205 790 623
- DE-U1- 9 304 211

## Beschreibung

Die vorliegende Erfindung betrifft einen Ladestecker für Elektroautos. Die vorliegende Erfindung betrifft darüber hinaus dessen Herstellung.

### Stand der Technik

Als Ladestation wird in der Elektrotechnik jedwede stationäre Vorrichtung oder elektrische Anlage bezeichnet, welche dazu dient, mobilen akkubetriebenen Geräten, Maschinen oder Kraftfahrzeugen durch einfaches Einstellen oder Einstecken Energie zuzuführen, ohne den Energiespeicher - etwa die Traktionsbatterie eines Elektroautos - entnehmen zu müssen. Ladestationen für Elektroautos werden mitunter auch als "Stromtankstellen" bezeichnet und können mehrere Ladepunkte umfassen.

Bekannt sind hier insbesondere Gleichstrom-Schnellladesysteme (*high performance charging,* HPC) wie das in Europa verbreitete sogenannte kombinierte Ladesystem (*combined charging system,* CCS). Beim gattungsmäßigen Gleichstromladen wird Gleichstrom aus der Ladesäule direkt in das Fahrzeug eingespeist und hierzu durch einen leistungsstarken Gleichrichter vom Stromnetz oder durch große Pufferakkumulatoren an Solartankstellen bereitgestellt. Im Fahrzeug befindet sich ein Batteriemanagementsystem, das mit der Ladesäule kommuniziert, um die Stromstärke anzupassen oder bei Erreichung einer Kapazitätsgrenze den Vorgang zu beenden.

Die Leistungselektronik befindet sich hierbei üblicherweise in der Ladesäule. Da die Gleichstromanschlüsse der Ladesäule direkt mit entsprechenden Anschlüssen der Traktionsbatterie verbunden werden, lassen sich verlustarm hohe Ladeströme übertragen, was kurze Ladezeiten ermöglicht, aber auch eine beträchtliche Abwärme erzeugt.

Für diesen Zweck sind unterschiedlichste Ladekabel sowie Ladekupplungen und -stecker bekannt, die typischerweise einem hohen Verschleiß ausgesetzt sind. Insbesondere die Kontaktstifte ("Pins") sind durch die hohe Anzahl von Steckzyklen im täglichen Gebrauch einem hohen Abrieb unterworfen. Die Abnutzung der Pins gefährdet jedoch den verlässlichen Kontakt insbesondere bei der Leitung von Signalen, die mit geringer Spannung übertragen werden. Die Kunststoffschale und die Pin-Halterung sind neben der mechanischen Abnutzung durch die häufigen Steckzyklen und die Kräfte auf die Pin-Fassungen auch der Zersetzung durch Witterung, Licht, Sauerstoff und andere Oxidationsmittel ausgesetzt. Dabei ist zu beachten, dass diese Bauteile eine sicherheitskritische Isolationsfunktion erfüllen. Dabei sind sie mitunter einer beträchtlichen mechanischen Belastung ausgesetzt, insbesondere durch ein Fallenlassen des Steckers auf den Boden. Das Kabel als relativ flexibles Element erträgt dies deutlich leichter als der Stecker.

Ein vollständiger Ersatz des Steckers in regelmäßigen Zyklen ist daher branchenüblich, allerdings sehr kosten- und zeitintensiv. Wird der Stecker mit dem Kabel ausgetauscht, müssen die Ladesäulen in der Regel geöffnet werden, um alle Signal- und Leistungsleiter neu anzuschließen und die Kabelführung, etwaige Zugentlastungen oder Aufhängungen neu einzurichten. Werden dagegen nur der Stecker und die verschlissenen Pins ausgetauscht, so müssen in der Regel die Leitungsenden gekürzt und die neuen Pins gelötet oder gecrimpt werden. Vor Ort erweisen sich diese Verfahren als aufwändig und anfällig für Qualitätsprobleme. Ferner verringern sich mit jedem Austausch von Pins ungewollt die Kabellängen. Nach dem selektiven Austausch einzelner Pins haben die Leitungen zudem unterschiedliche Leitungslängen.

Aufgrund des hohen Aufwandes beim Austausch von Ladekabeln im Feld werden daher teils kostenintensive widerstandsfähige Materialien verwendet, beispielsweise Gold-Nickel-Pins und zersetzungsbeständige Kunststoffe für die Stecker-Gehäuse, die jedoch den Austausch nur verzögern, nicht aber verhindern können.

Die CN 106 532 339 A zeigt einen Ladestecker für ein Elektroauto, umfassend einen Steckerkopf und einen Isolierkörper, wobei der Steckerkopf und der Isolierkörper derart lösbar verbunden sind, dass der Isolierkörper ausgetauscht werden kann.

Aus der DE 93 04 211 U1 ist ein elektrischer Steckerstift mit einem Sprengring bekannt.

Die CN 205 790 623 U offenbart ein Verfahren zur Herstellung eines Ladesteckers.

CN105896212, DE102011106335, DE102013007330, EP2555340B1 sowie US2015035483 offenbaren Elektrofahrzeug-Ladestecker mit austauschbaren Abschnitten.

### Offenbarung der Erfindung

Die Erfindung stellt einen Ladestecker für Elektroautos sowie ein Verfahren zu dessen Herstellung gemäß den unabhängigen Ansprüchen bereit.

Eine Grundidee der Erfindung besteht in der Teilung des Ladesteckers in mindestens einen Teil mit hohem Verschleiß und/oder hoher Sicherheitsfunktion oder -bedeutung sowie mindestens einen Teil mit geringerem Verschleiß und/oder niedrigerer Sicherheitsfunktion oder -bedeutung. Der Teil des Ladesteckers mit hohem Verschleiß und/oder hoher Sicherheitsfunktion oder -bedeutung wird entsprechend austauschbar gestaltet.

Beispielsweise ist im Sinne der Erfindung der überwiegende Teil des Steckers, der in die mechanische Aufnahme im Fahrzeug eingeführt und damit mechanischem Abrieb und Belastung ausgesetzt wird, austauschbar. Es ist dabei vorteilhaft, dass möglichst alle sensitiven Teile (ggf. auch leicht brechende Teile des Gehäuses) Teil des Tauschteiles sind, andererseits aber so wenig wie möglich getauscht wird, um die Kosten des Teiles zu beschränken. Der Stecker- oder Isolationskörper kann insbesondere Pins enthalten, die ebenso mit dem Isolationskörper ausgetauscht werden. Wird der Isolationskörper wie eine Maske über den Stecker aufgesetzt, können - angesichts der häufigen Steckvorgänge mit wechselnden Fahrzeugen besonders verschleißanfälligen - Pins über hochwertige Kontaktstifte mit nur wenigen Steckzyklen mit dem Stecker verbunden werden. Diese zusätzlichen Pins benötigen hierbei nur sehr wenige Steckzyklen, da diese nur beim Wechsel des Isolationskörpers gesteckt werden.

Weitere vorteilhafte Ausgestaltungen der Erfindung sind in den abhängigen Patentansprüchen angegeben. So können der Isolationskörper und mindestens ein Pin auf den Stecker-Körper aufsteckbar gestaltet werden. In diesem Fall sollte der Isolationskörper vorzugsweise am Stecker fixiert werden, beispielsweise mittels Schrauben, Klemmfedern oder Nieten. Vorzugsweise ist die Fixierung für Dritte nicht lösbar, beispielsweise durch die Verwendung von unüblichen Schraubenköpfen, Nieten, einer chemisch lösbaren Verklebung der Schrauben oder eines Schlosses. Vorzugsweise wird die Sicherheit des Ladesteckers dadurch erhöht, dass Signalpins - beispielsweise für Steuerpilot- (*control pilot,* CP) oder Näherungspilotsignal (*proximity pilot,* PP) - einerseits und Leistungspins andererseits zumindest teilweise voneinander getrennt sind. Weitere Pins wie die Schutzerde (*protective* earth, PE) können hierbei jeglicher Gruppe zugeordnet werden. Ferner können auch nur einige Pins den getrennten Gruppen zugeordnet werden. Idealerweise ist zumindest ein Signal-Pin, dessen Signal für die Erkennung und Freigabe des Steckers im Ladebetrieb benötigt wird und eine sicherheitsrelevante Funktion erfüllt, von den eigentlichen Leistungskontakten getrennt.

Die Trennung ist beispielsweise so ausgeführt, dass die Leistungskontakte als Wechselpins auf vorgesehene Kontakte im eigentlichen Steckerkopf, die Signalpins jedoch in das Steckergesicht, das die Leistungspins fixiert, gesteckt, gecrimpt oder geschraubt und mit diesem gewechselt werden. Weiterhin sind die Leistungskontakte wie in den Ansprüchen beschrieben zwischen Steckerkopf und Steckergesicht, die Signalkontakte jedoch von der Stirnseite des Steckergesichtes in selbiges gesetzt werden. Diese Ausgestaltung trägt dem Umstand Rechnung, dass der Verschleiß der Leistungskontakte aufgrund des hohen Stroms und der Spannung oft höher ist als auf den Signalpins, sodass Signal- und Leistungspins voneinander unabhängig, beispielsweise in anderen Zeitintervallen, ausgetauscht werden sollten. So kann in dieser Ausführungsform etwa nach dem Wechsel der Leistungspins dasselbe Steckergesicht (mit den eingebetteten Signalpins) weiterverwendet werden, wenn sein mechanischer Zustand es zulässt.

Idealer-, aber nicht zwingenderweise lassen sich die nicht direkt auf den Steckerkopf aufzusetzenden Pins - etwa die Signalpins - nicht direkt auf den Steckerkopf setzen, um nicht die Möglichkeit zu schaffen, dass ein Nutzer alle Pins instabil oder berührbar auf den Steckerkopf setzt und den Stecker so ungeschützt steckt.

### Kurze Beschreibung der Zeichnungen

Ausführungsbeispiele der Erfindung sind in den Zeichnungen dargestellt und werden im Folgenden näher beschrieben.
Figur 1 zeigt das Beispiel eines erfindungsgemäßen CCS-Ladesteckers gemäß EN 62196 Typ 2 ("IEC Typ 2").
Figur 2 zeigt eine Draufsicht des Ladesteckers.
Figur 3 und Figur 4 zeigen perspektivische Ansicht eines Isolierkörpers.
Figur 5 zeigt einen Steckerkopf mit aufgesetzten, aber wechselbaren Leistungspins.
Figur 6 zeigt den Steckerkopf mit demontierter Frontplatte und freiem Blick auf die dahinterliegenden Pins zur Kontaktierung und Aufnahme der Wechselkontakte.
Figur 7 zeigt den Steckerkopf mit zusätzlich demontiertem Gehäuse und - mit Ausnahme der Schutzerde - entfernten Leitungen.
Figur 8, 9 und 10 zeigen die Frontplatte mit Kontaktschale und aufgestecktem Wechselisolierkörper ("Steckergesicht").
Figur 11 zeigt die perspektivische Ansicht eines Leistungskontaktes.
Figur 12 zeigt den in einer zugehörigen Aufnahme montierten Kontakt.
Figur 13 zeigt den in einer alternativen Aufnahme montierten Kontakt.
Figur 14 zeigt die Aufnahme in ihren Einzelheiten ohne Kontakt.
Figur 15, 16 und 17 zeigen Trennungsvarianten des Ladesteckers.
Figur 18, 19 und 20 verdeutlichen weitere Aspekte der Pin-Lagerung und Montage.
Figur 21 stellt eine besondere Ausführungsform der Pin-Lagerung mit gleichzeitiger mechanischer Lagerung und Ausformung eines Berührschutzes dar.
Figur 22 verdeutlicht die geometrischen Verhältnisse der Ausführungsform gemäß Figur 21.

### Ausführungsformen der Erfindung

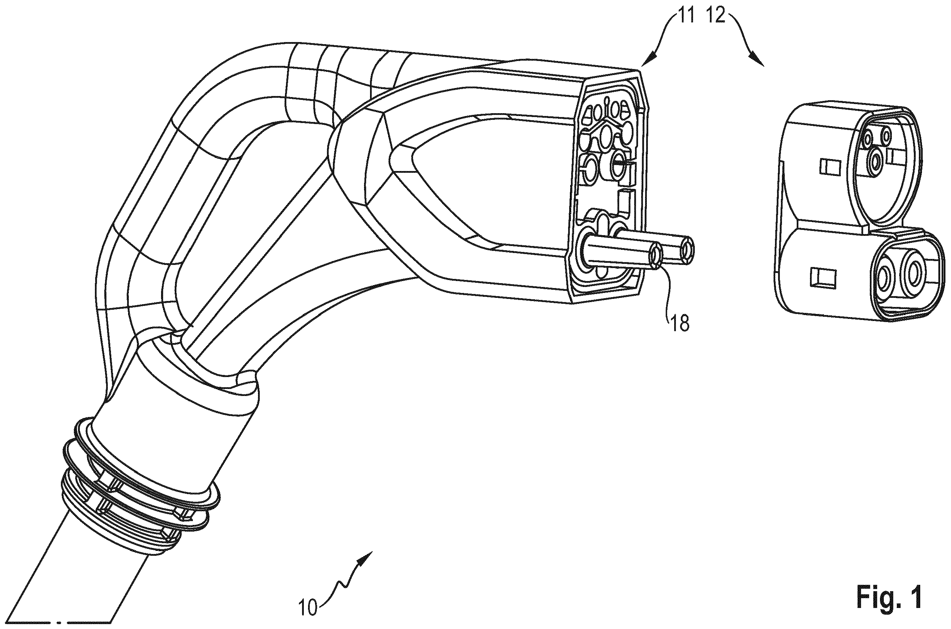

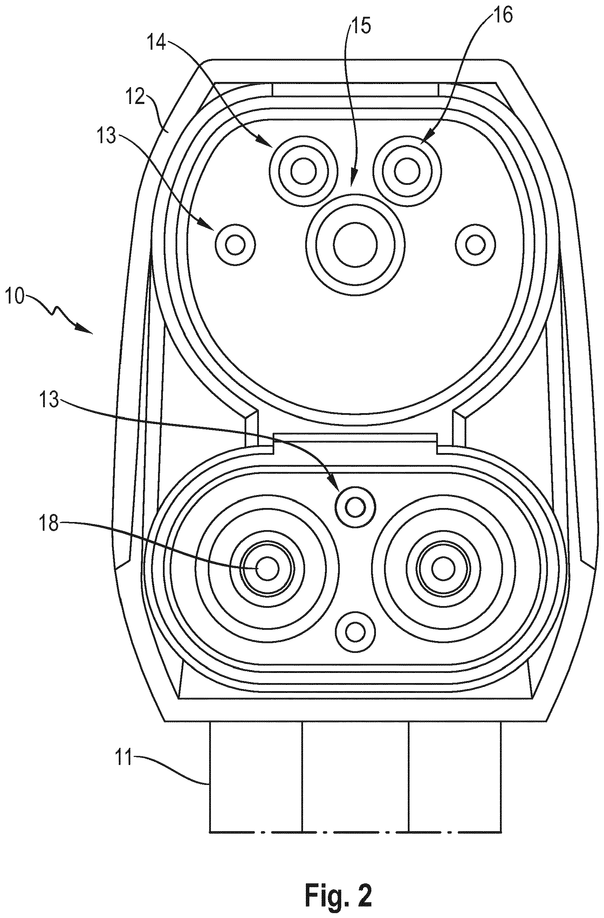

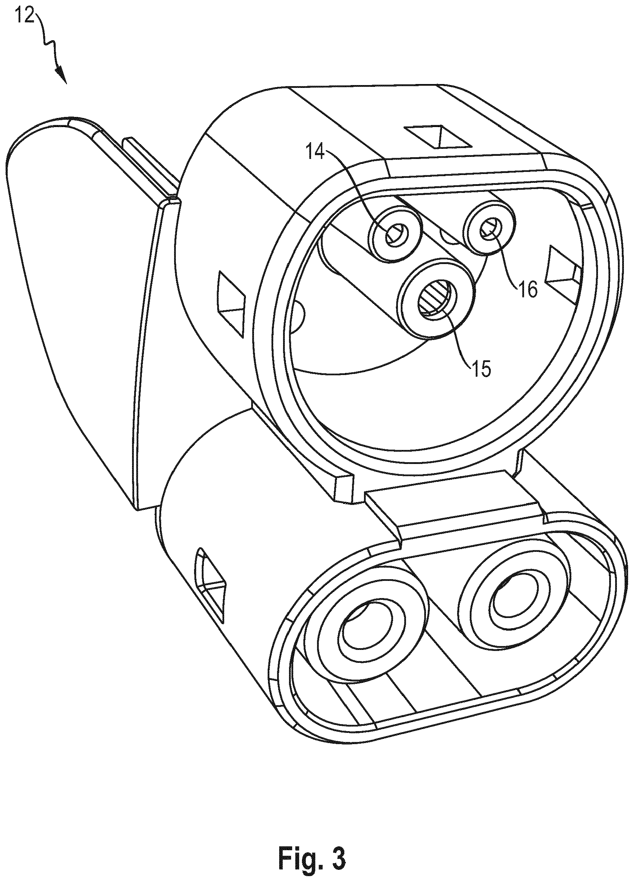

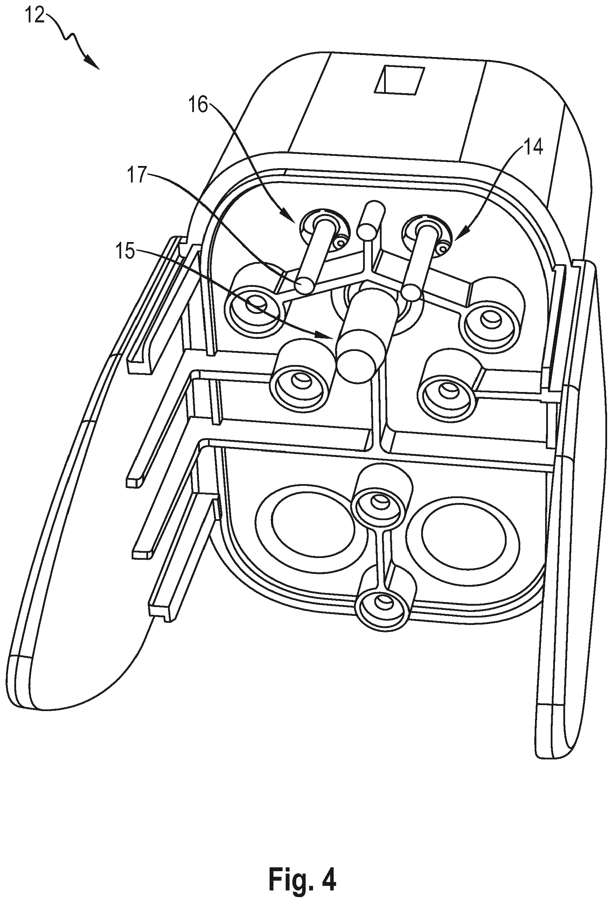

Figur 1 illustriert den zweigeteilten Aufbau eines erfindungsgemäßen Ladesteckers (10), der sich vorliegend einerseits aus einem Steckerkopf (11) mit aufgesetzten DC-Leistungskontaktstiften (18) und andererseits einem Isolierkörper (12) mit allen Steuerkontakten zusammensetzt. Zur Montage kann der Ladestecker (10) somit ohne Isolierkörper (12) vollständig montiert werden. Der Isolierkörper (12) wird anschließend über die Leistungskontaktstifte (18) auf den Steckerkopf (11) aufgesteckt und - beispielsweise mit der in Figur 2 erkennbaren Schraubverbindung (13) - befestigt. Auf diese Weise werden, wie eine Zusammenschau der Figuren 3 und 4 erkennen lässt, Steuerpilotkontaktstift (14), Schutzerde (15) und Näherungspilotkontaktstift (16) über den Isolierkörper (12) und dessen innenseitige Kontaktpunkte (17) durchgehend mit dem Steckerkopf (11) verbunden.

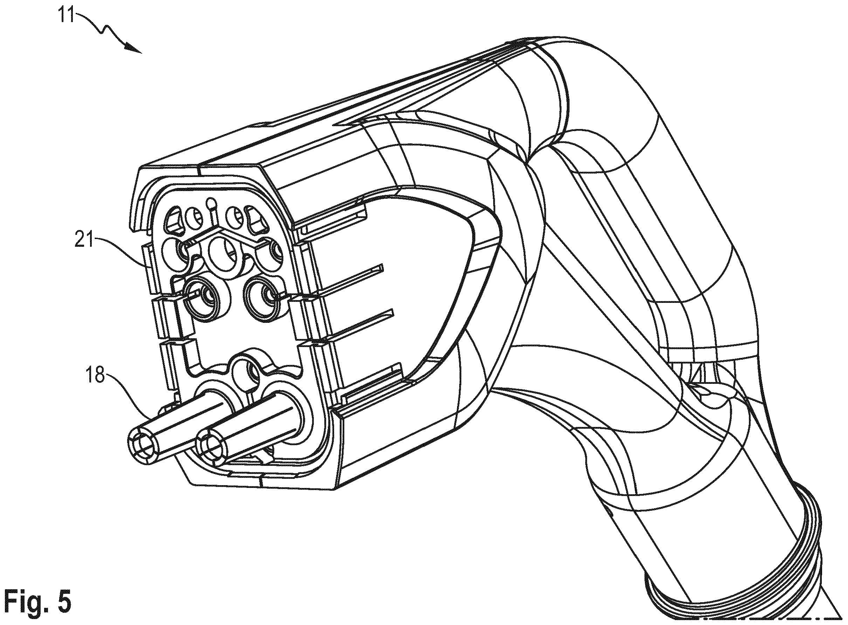

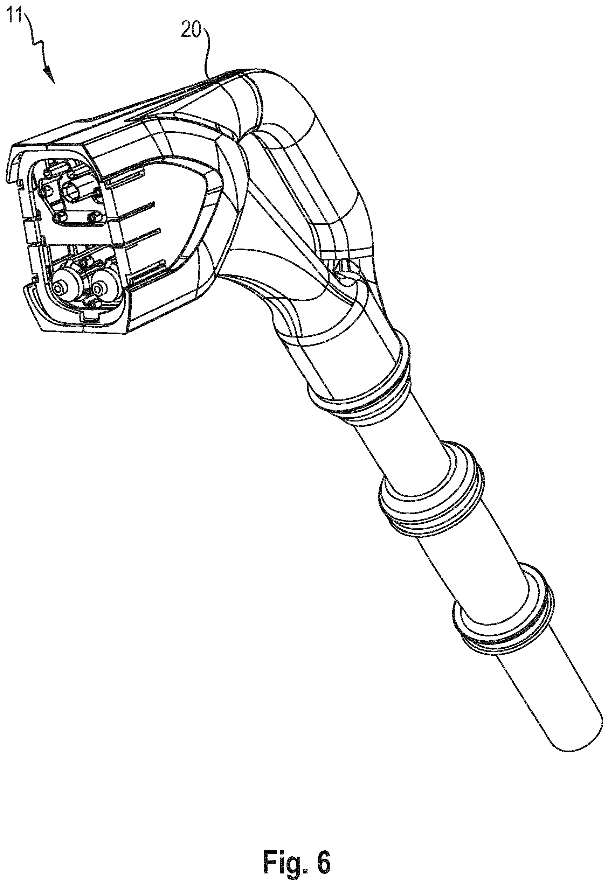

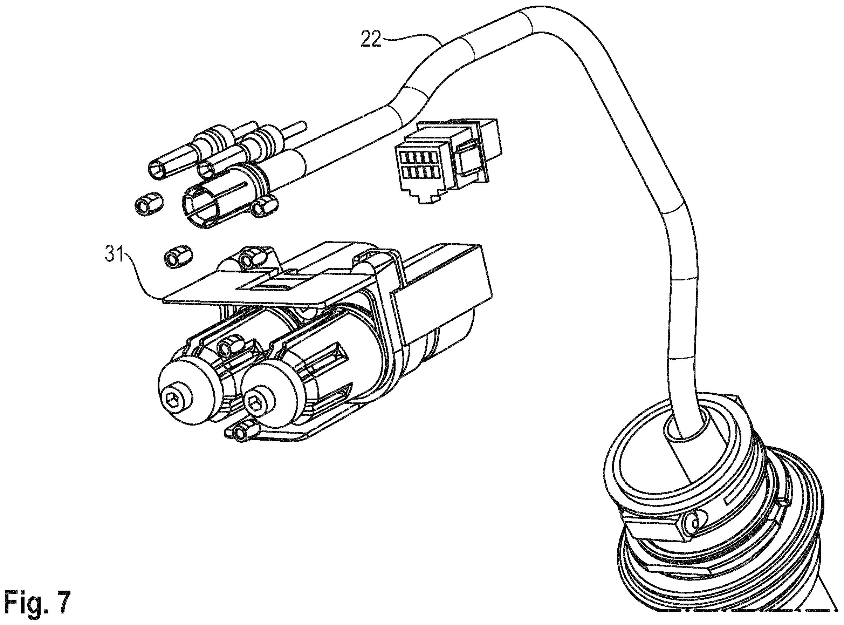

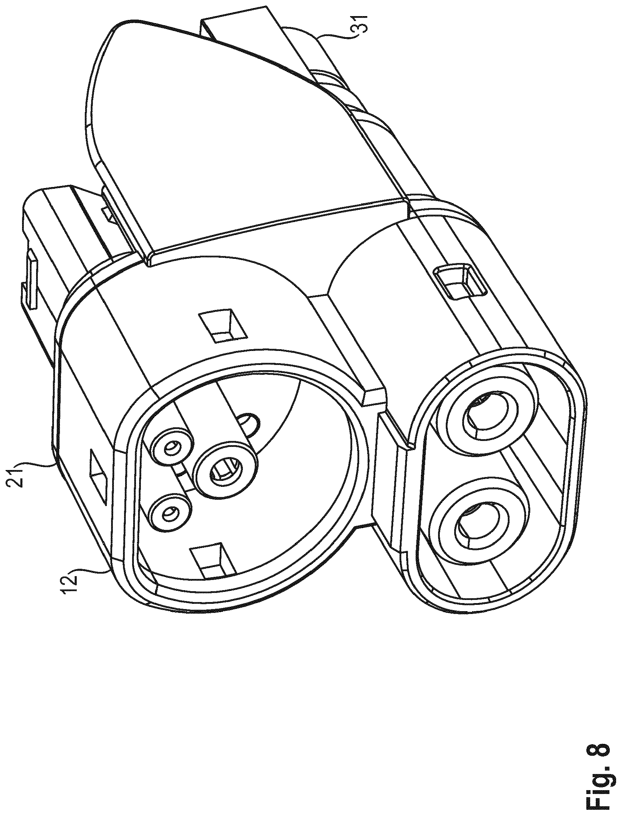

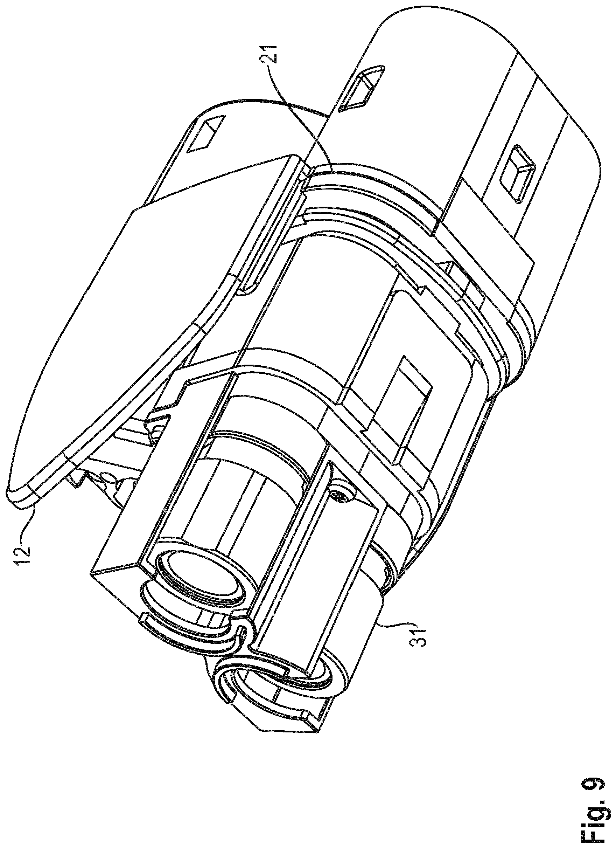

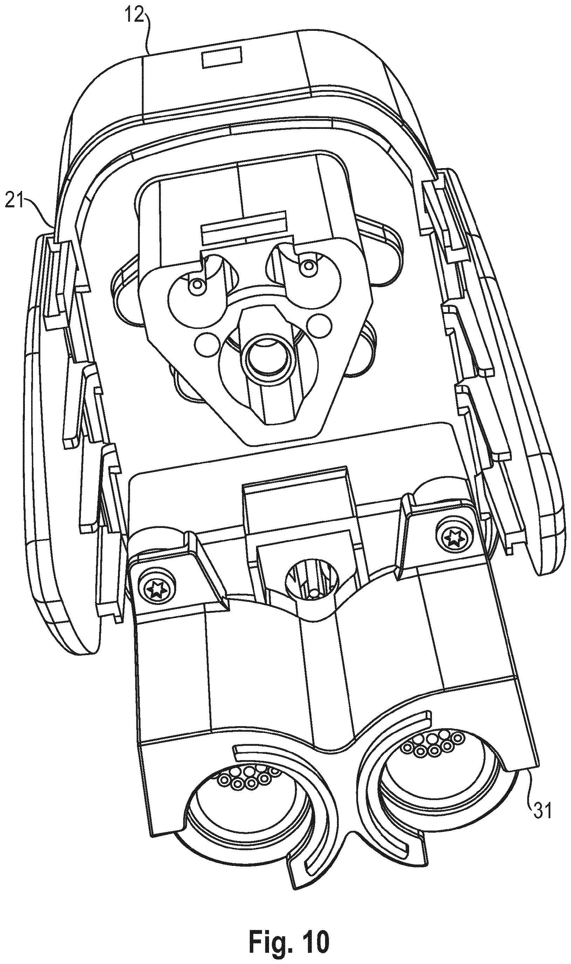

Die Figuren 5, 6 und 7 verdeutlichen den Aufbau des Steckerkopfes (11) selbst: Während Figur 5 den Steckerkopf (11) mit bereits aufgesetzten, vorzugsweise wechselbaren Leistungspins darstellt - die Signalkontaktstifte (14, 16) befinden sich in dieser Ausführungsform im wechselbaren Isolierkörper (12) -, sind in den Figuren 6 und 7 die hinter der demontierten Frontplatte (21 - Figur 5) liegenden Pins zur Kontaktierung und Aufnahme der wechselbaren Kontaktstifte (14, 15, 16, 18) erkennbar. Die Figuren 8, 9 und 10 veranschaulichen die Frontplatte (21) mit der zur mechanischen Halterung der Aufnahmepins im Inneren des Steckerkopfes (11) vorgesehenen Kontaktschale (31) und aufgestecktem wechselbaren Isolierkörper (12).

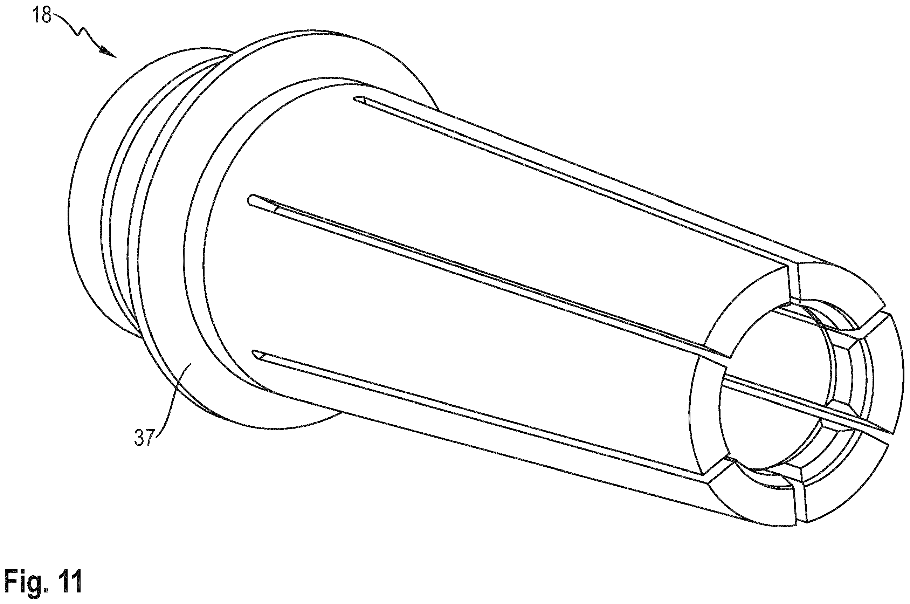

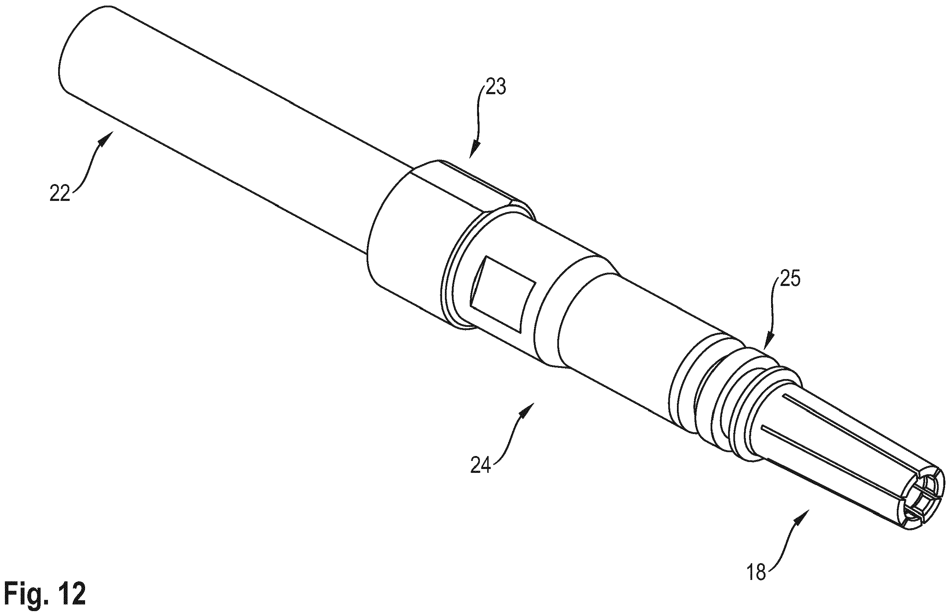

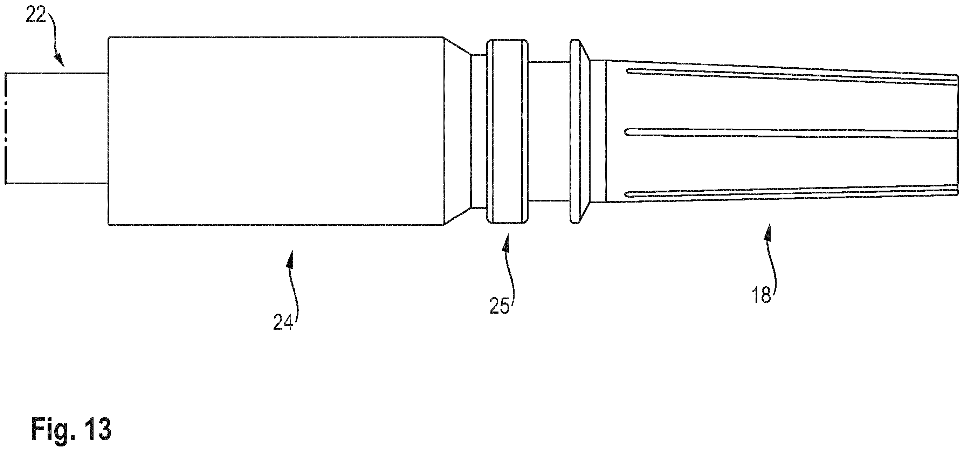

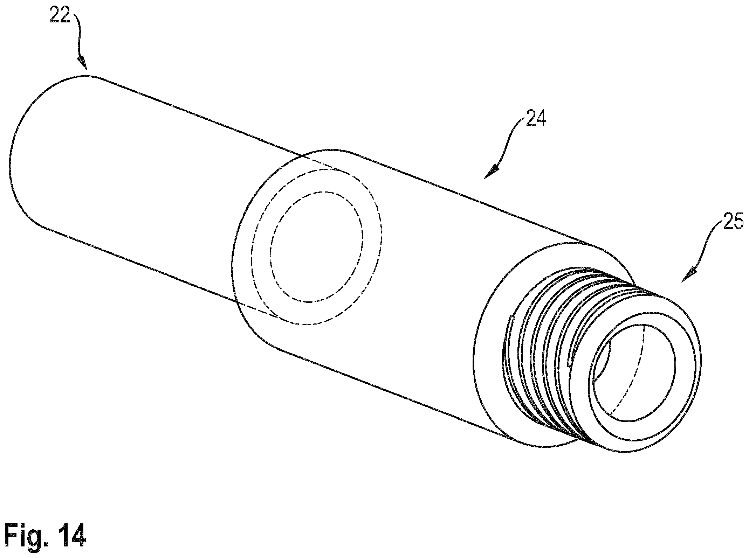

Eine Möglichkeit zur Anbringung der Leistungskontaktstifte (18) ist den Figuren 11 bis 14 zu entnehmen. Zwischen Kabel (22) und Leistungskontaktstiftaufnahme (24) besteht hier erkennbar eine Crimpverbindung (23), während die Verbindung (25) zwischen Leistungskontaktstiftaufnahme (24) und zugehörigem Leistungskontaktstift (18) bspw. durch Verschraubung, Federkontakt, Crimpung oder plastische Verformung des Leistungskontaktstiftes (18) hergestellt wird, um einen robusten elektrischen Kontakt herzustellen.

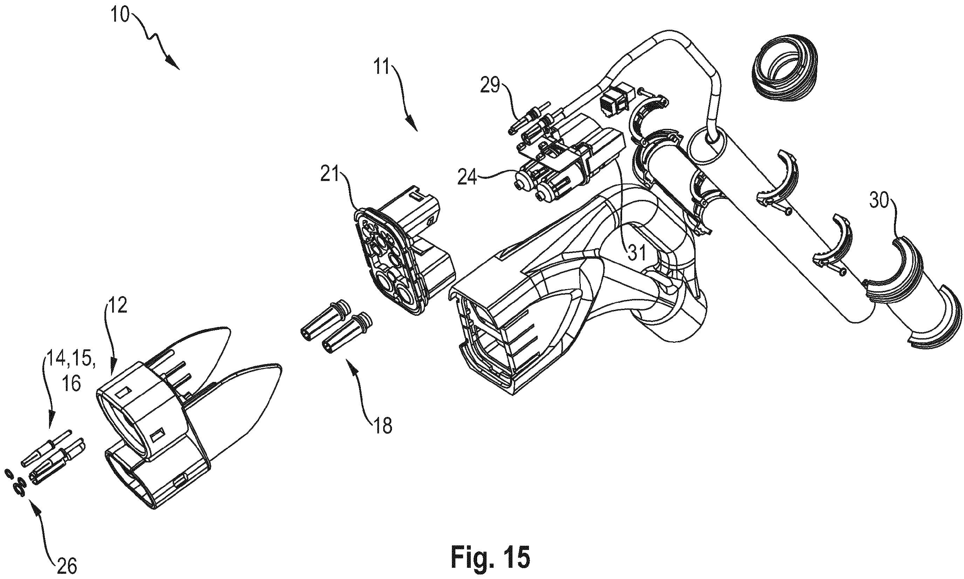

Die Figuren 15, 16 und 17 beleuchten Varianten der Trennung von Steckerkopf (11) und Isolierkörper (12). So sind im Falle der Figur 15 Signalkontaktstifte (14, 16) und Schutzerde (15) im Isolierkörper (12) angeordnet. Vor dessen Aufstecken werden zuerst die Leistungskontaktstifte (18) aufgesetzt bzw. ausgetauscht. Damit sind die für die Detektion des Ladesteckers (10) notwendigen Signale auch in der Montage und dem Wechselprozess später angesetzt. Ein nur zum Teil gewarteter oder montierter Ladestecker (10) würde auf diese Weise nicht erkannt und freigeschaltet. Bis auf den "permanenten" Steckerteil oder Steckerkopf (11) sind somit alle Teile für einen Wechsel vorgesehen.

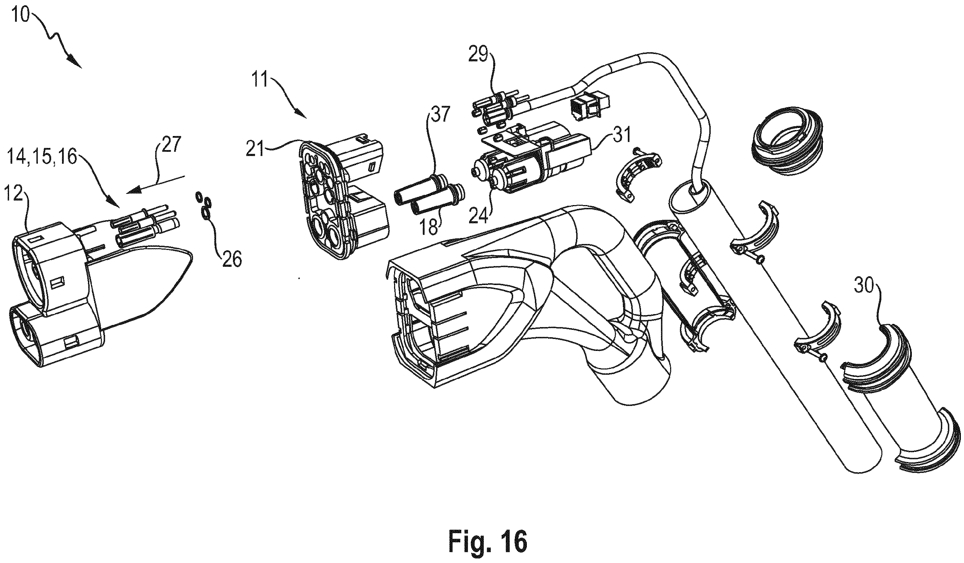

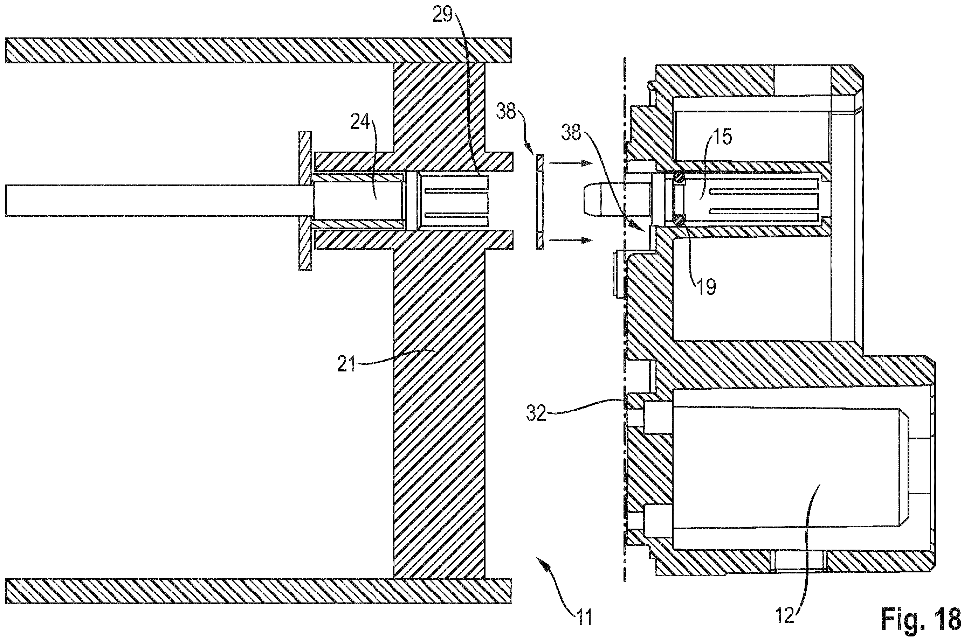

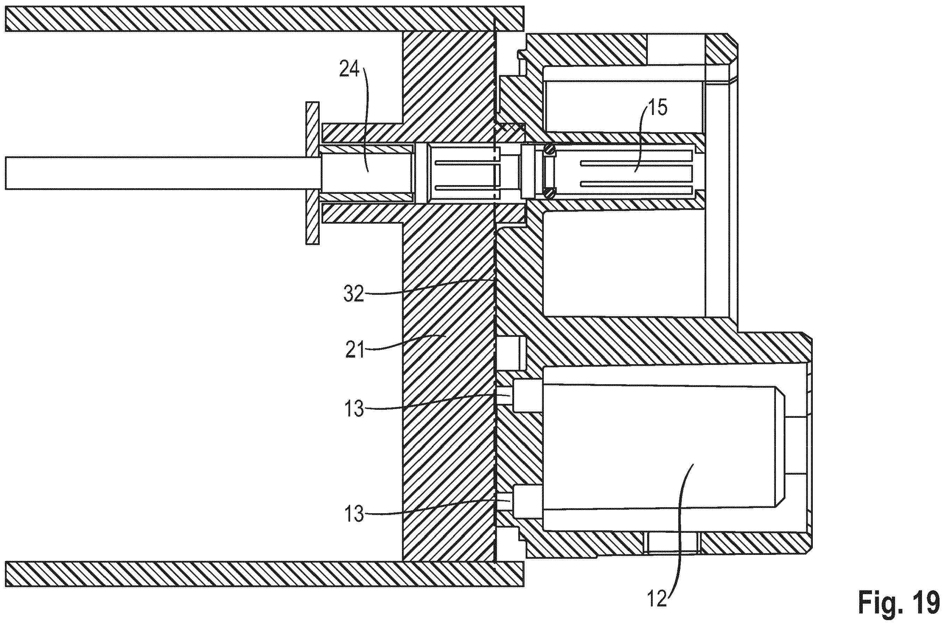

Gemäß Figur 16 werden die Signalkontaktstifte (14, 16) stattdessen zwischen Steckerkopf (11) und Isolierkörper (12) mit Sprengringen (26) in den Isolierkörper (12) montiert oder sind dort sogar als eine Einheit vormontiert (Pfeil 27). Die Leistungskontaktstifte (18) sind in dieser Ausführungsform auf die Leistungskontaktstiftaufnahmen (24) im Steckerkopf (11) montiert, wobei die Montage vorzugsweise bei demontierter Frontplatte (21) erfolgt. Ebenso sind in dieser Ausführungsform vorzugsweise die Signalkontaktstiftaufnahmen (29) im Steckerkopf (11) derart montiert, dass sie hinter der Frontplatte (21) oder in in der Frontplatte (21) vorliegenden Kanälen oder Vertiefungen liegen. Die Verbindung zwischen Leistungskontaktstiften (18) und Leistungskontaktstiftaufnahmen (24) kann dabei eine lösbare Verbindung, beispielsweise in Form einer Schraubverbindung, oder eine dauerhafte Verbindung, beispielsweise durch eine plastische Verformung, wie sie auch in Crimp- und Quetschverbindungen vorliegt, sein. Die Frontplatte (21) wird über die Leistungskontaktstiftaufnahmen (24) mit den aufmontierten Leistungskontaktstiften (18) und die Signalkontaktstiftaufnahmen (29) derart montiert, dass die Frontplatte (21) die Leistungskontaktstifte (18) axial gegen Entnahme der Leistungskontaktstifte (18) in Richtung des Isolierkörpers (12) sichert und vorzugsweise durch seitliche Wände in der Frontplatte (21) auch in radialer Richtung begrenzt (siehe auch Fig. 18 und Fig. 19). Für die Sicherung der Leistungskontaktstifte (18) bei montierter Frontplatte (21) gegen Entnahme in Richtung des Isolierkörpers (12) können die Leistungskontaktstifte über einen Sicherungskragen (37) verfügen, der bei montierter Frontplatte (21) in axialer Richtung durch ein Gegenstück in den für ein Durchtauchen der Leistungskontaktstifte (18) vorgesehenen Kanal begrenzt wird. Diese Begrenzung kann bspw. derart ausgeformt sein, dass der Sicherungskragen (37) gegen eine durch eine Durchmesserverringerung des für ein Durchtauchen der Leistungskontaktstifte (18) vorgesehenen Kanals in der Frontplatte (21) gebildete Kante stößt, die eine weitere Bewegung der Leistungskontaktstifte (18) in Richtung des Isolierkörpers (12) nicht ohne Entfernung der Frontplatte (21) möglich ist. Die Pins werden zudem durch einen Sprengring oder Sicherungsring (38 - Figur 18) fixiert, um eine - etwa zu Wartungszwecken - als Ganze austauschbare Baugruppe zu bilden.

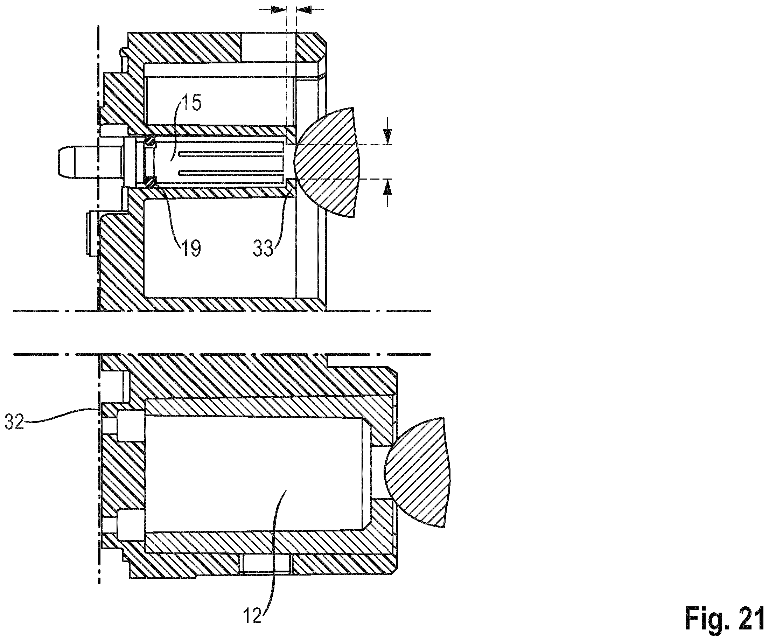

Die in Fig. 16 dargestellte Ausführungsform zeigt ferner einen Isolierkörper (12), der vorzugsweise als vormontiertes Zusammenbauteil mit bereits eingesetzten Signalkontaktstiften (14, 16) und Wechselkontakten für die Schutzerde (15) für einen Tausch an den Ort der Ladestation geliefert werden kann. Die Signalkontaktstifte (14, 16) und der oder die Wechselkontakte für die Schutzerde (15) werden in dieser Ausführungsform bevorzugt von der im montierten Zustand an die Frontplatte (21) stoßenden Seite in für diesen Zweck vorgesehene Vertiefungen oder Kanäle (siehe auch Fig. 18 und Fig. 19) eingesetzt. Auf der dieser Einführungsseite abgewandten Seite werden die Signalkontaktstifte (14, 16) und Wechselkontakte für die Schutzerde (15) axial durch ein Widerlager, bspw. eine durch eine Durchmesserverringerung der Vertiefungen oder Kanäle gebildete Kante, an die die Frontseite der jeweiligen Signalkontaktstifte (14, 16) und Wechselkontakte für die Schutzerde (15) zwingend stoßen, begrenzt. Diese Widerlager können im Sinne der Erfindung ferner gleichzeitig als Berührschutz gegen Berühren der leitenden Oberflächen der Signalkontaktstifte (14, 16) und/oder Wechselkontakte für die Schutzerde (15) ausgeführt werden (siehe auch Fig. 21). Auf der Einführungsseite können die Signalkontaktstifte (14, 16) und Wechselkontakte für die . Schutzerde (15) nach dem Einsetzen bspw. durch eine Sicherung axial gesichert werden. Bei dieser Sicherung kann es sich wie in Fig. 16 dargestellt jeweils um einen Sprengring (26) handeln. Radial können die Signalkontaktstifte (14, 16) und Wechselkontakte für die Schutzerde (15) durch die Wände der jeweiligen Vertiefung oder Kanäle im Isolierkörper (12), vorzugsweise mit leichter radialer Beweglichkeit, gelagert werden. Eine gewisse geometrische Flexibilität, die die Steckbarkeit bei nicht perfekten Pinabständen und Toleranzen vereinfacht, bei gleichzeitiger Sicherung kann durch elastische Werkstücke, beispielsweise O-Ringen oder O-Dichtringen (19) aus Elastomeren wie Kautschuk, Silikon oder dergleichen gewährleistet. Die elastischen Werkstücke erlauben gewisse radiale Bewegung bei Krafteinwirkung, wie sie beispielsweise im Steckprozess auftreten können, damit die Pins des Steckers sich mit jenen der entsprechenden Buchse, beispielsweise in einem Fahrzeug, aufeinander ausrichten können. Die O-Ringe oder O-Dichtringe (19) können neben der genannten mechanischen Funktion zusätzlich eine flüssigkeitsdichtende Funktion aufweisen, um ein Eindringen von Flüssigkeiten und Feuchte durch die Vertiefungen oder Kanäle des Isolierkörpers (12) in das Innere des Steckers zu unterbinden. Der vormontierte Isolierkörper (12) mit Signalkontaktstifte (14, 16) und/oder Wechselkontakte für die Schutzerde (15) und optionaler Sicherung, bspw. durch Sprengringe (26), kann vor Ort als Ganzes am Stecker gewechselt und auf die Frontplatte (21) montiert werden. Eine Sicherung gegen Entnahme des Isolierkörpers von der Frontplatte (21) oder dem Steckerkopf (11) durch Unbefugte kann vorzugsweise durch nicht genormte Werkzeuge, bspw. Schrauben mit nicht mit Normen kompatiblen Schraubenköpfen oder vertieften Sicherungsfedern, deren Entsicherung Spezialwerkzeug benötigen, erfolgen.

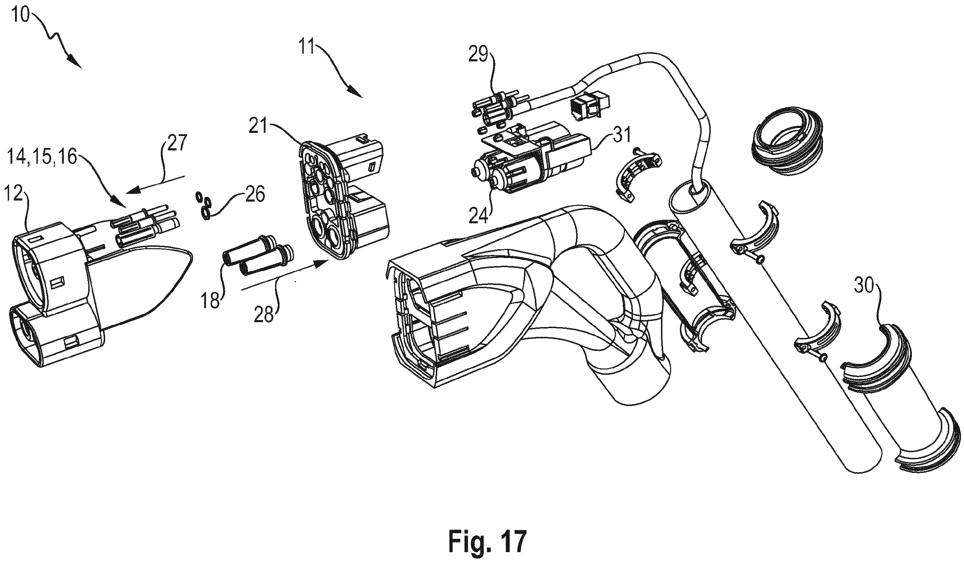

In der Ausführungsform der Figur 17 werden zusätzlich die Leistungskontaktstifte (18) vor Ort auf die Leistungskontaktstiftaufnahmen (24) im Steckerkopf (11) montiert.

Die Figuren 18 und 19 lassen die Komponenten bei der Montage am Beispiel der Schutzerde (15) im getrennten bzw. verbundenen Zustand erkennen. Während der innere Pin (24) im Steckerkopf (11) mechanisch fix liegen kann - ein radiales Spiel ist in diesem Fall entbehrlich -, sind Signal- oder PE-Pin (15) im Isolierkörper (12) beispielsweise über einen Sicherungs- oder O-Dichtring (19) fixiert. Dieser optionale Dichtring (19) um den Pin (15) stellt einerseits den mechanischen Sitz des axial fixierten Pins im Isolierkörper (12) sicher, lässt aber gezielt ein radiales Spiel zu, damit beim Montage-, aber auch beim Steckvorgang alle Pins gleichzeitig passen. Er dichtet den Ladestecker (10) zudem gemäß der erforderlichen IP-Klasse ab.

Zur Montage vor Ort werden in dieser Ausführungsform zunächst der alte Isolierkörper (12) und anschließend die alten Leistungskontaktstifte (18) entfernt. Sodann werden neue Signalkontaktstifte (14, 16) auf den Signalkontaktstiftaufnahmen (29) platziert und aufgesteckt. Falls die Signalkontaktstifte (14, 16) getrennt vom Isolierkörper (12) angeliefert werden, sind diese zudem im Isolierkörper (12) zu montieren und ggf. zu fixieren. Der Isolierkörper (12) mit eingebetteten Signalkontaktstiften (14, 16) wird nun über die Leistungskontaktstifte (18) gebracht und fixiert.

Derjenige Abschnitt der Kontaktstifte (14, 15, 16, 18), der die zugehörige Kontaktstiftäufnahme (24, 29) überdeckt, kann zur Verbesserung des elektrischen Kontaktes verschleißanfällig für nur einen Steckzyklus ausgelegt werden. Beispielsweise kann er weicher sein als die Kontaktstiftaufnahme (24, 29) und sich plastisch verformend in deren Kontaktstelle drücken. Die Kontaktstiftaufnahmen (24, 29) werden mit herkömmlichen Methoden an das Kabel (22) angeschlossen, beispielsweise gecrimpt oder gelötet.

Die Signalkontaktstifte (14, 16) können zudem mechanisch von zwei Seiten fixiert werden. Radial wird jeder Kontaktstift (14, 15, 16) vorzugsweise von mindestens einem flexiblen O-Dichtring (19) oder dergleichen mit ausreichend Spiel, aber trotzdem weitgehend festem Halt fixiert. Der O-Dichtring (19) wird als Verschleißteil gemeinsam mit dem Kontaktstift (14, 15, 16) ausgetauscht. Axial wird ein Kontaktstift (14, 15, 16) durch die Stirnseite des Isolierkörpers (12) fixiert, deren Öffnung geringfügig kleiner ist als die vordere Fläche des Kontaktstiftes (14, 15, 16) und diesen somit gegen den Steckerkopf (11) und die Kontaktstiftaufnahme (29) drückt. Ein elastisches Zwischenstück an der Stirnseite kann für dauerhaften Druck des Kontaktstiftes (14, 15, 16) in die Kontaktstiftaufnahme (29) sorgen, damit sich dort - beispielsweise bei thermisch bedingten Längenänderungen, rein plastischen Verformungen etc. - über die Lebensdauer des Ladesteckers (10) keine Lücken ergeben. Zur Unterstützung des Montagevörganges kann die zugehörige Mulde im Isolierkörper (12) konisch geformt sein. Damit wird eine bestimmte Tiefe der Kontaktstifte (14, 15, 16) im Isolierkörper (12) durch den O-Dichtring (19) eingestellt.

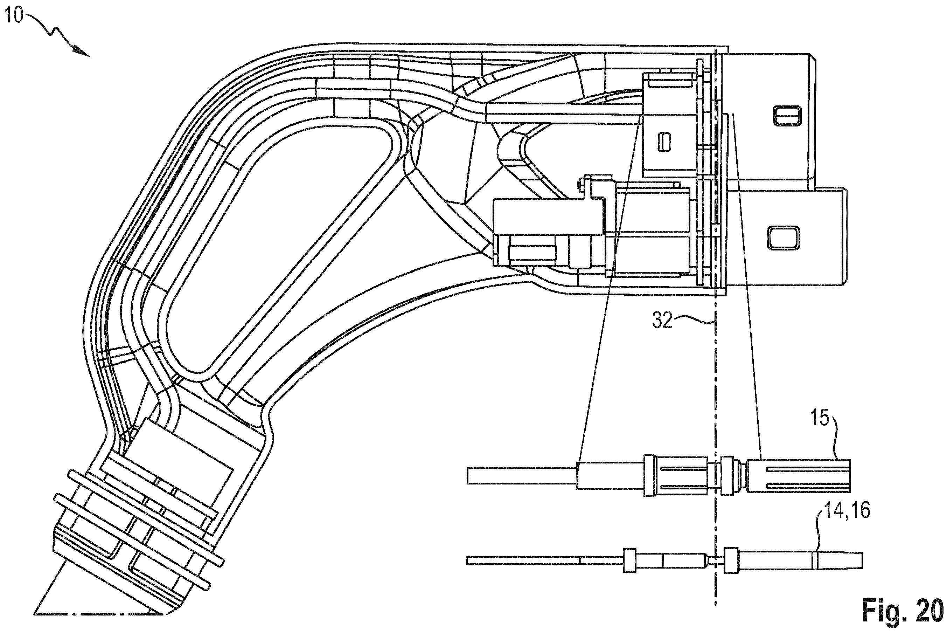

Figur 20 schließlich verdeutlicht die Kontakttrennung bei Abnahme des Isolierkörpers (12) am Beispiel von Schutzerde (15) und Signalkontaktstiften (14, 16). Deutlich wird hier, dass, sobald der Isolationskörper entfernt wird, auch Schutzerde- und Signalkontaktstifte (14, 15, 16) abfallen, die im Isolierkörper (12) mechanisch fixiert sind.

Figur 21 stellt einen Querschnitt des Isolierkörpers (12) gemäß einer Ausführungsform dar, der in zumindest einer Vertiefung oder einem Kanal zur Lagerung der Signalkontaktstifte (14, 16), Wechselkontakte für die Schutzerde (15) und/oder Leistungskontaktstifte (18) ein Widerlager (33) an der der Frontplatte (21) abgewandten Stirnseite des Isolierkorpers (12) aufweist, das durch eine Verjüngung des Durchmessers der jeweiligen Vertiefung oder des jeweiligen Kanals gebildet wird, aufweist. Das Widerlager (33) begrenzt gleichzeitig mechanisch die Bewegung des entsprechenden Pins in axialer Richtung gegen eine Entnahme, stellt mögliche axiale Kräfte im Steckprozess, während des Montageprozesses des Isolierkörpers auf den Steckerkopf (11) oder Gegendruck zum Einrasten der Pins in Pinaufnahmen des Steckerkopfes (11) bereit und dient als Schutz gegen ein Berühren der elektrisch leitenden Oberfläche der Signalkontaktstifte (14, 16), Wechselkontakte für die Schutzerde (15) und/oder Leistungskontaktstifte (18) durch Öffnungen auf der Frontplatte (21) abgewandten Stirnseite des Isolierkörpers (12). Der besondere Vorteil dieser Ausführungsform besteht in der gleichzeitigen Bereitstellung eines Berührschutzes und der mechanischen Lagerung durch dasselbe Element.

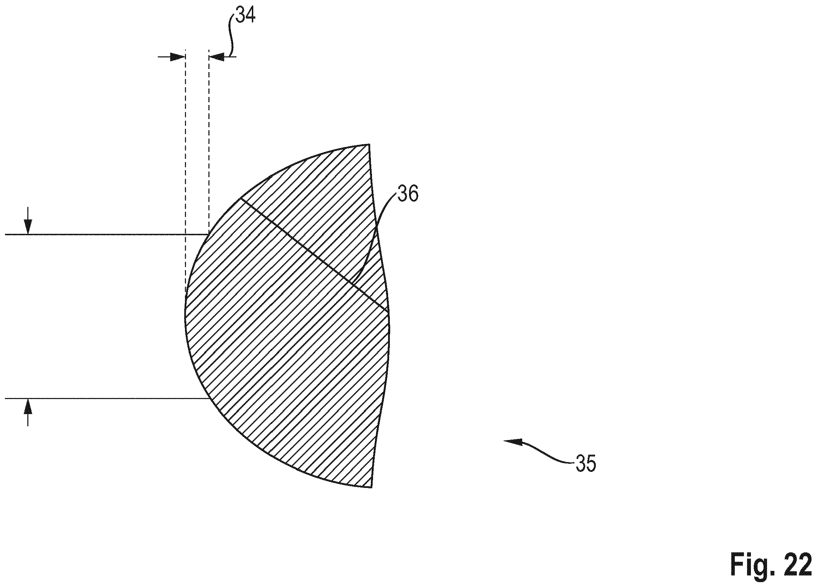

Figur 22 veranschaulicht die geometrischen Verhältnisse der Ausführungsform gemäß Figur 21. Für den Berührschutz ist die Durchmesserverjüngung hier derart ausgeformt, dass ihre axiale Länge (34) mindestens so groß ist, dass die Kuppe (35) eines Norm- oder Prüffingers, bspw. nach EN 60529 oder EN 50274, mit seinem kleinsten Segment oder seiner - gemessen am lokalen Wölbungsradius (36) - kleinsten Rundung durch eine Öffnung nicht so weit eindringen kann, dass sie die leitende Oberfläche eines Pins (14, 15, 16, 18) berühren kann. Vorzugsweise ist die radiale Länge des Segmentes mit verringertem Durchmesser ferner um die vorgeschriebene Kriechstrecke für die entsprechende Spannung des Pins erhöht.

## Patentansprüche

1. Ladestecker (10) für ein Elektroauto,
- der Ladestecker (10) umfasst einen Steckerkopf (11), einen Isolierkörper (12) und Kontaktstifte (14, 15, 16, 18),
- der Steckerkopf (11) und der Isolierkörper (12) sind derart lösbar verbunden, dass der Isolierkörper (12) ausgetauscht werden kann,
- die Kontaktstifte (14, 15, 16, 18) umfassen Signalkontaktstifte (14, 16), eine Schutzerde (15) und Leistungskontaktstifte (18),
- der Steckerkopf (11) weist ein Gehäuse (20) mit einer Frontplatte (21), Kabel (22), Kontaktstiftaufnahmen (24, 29) und eine Kontaktschale (31) auf,
**dadurch gekennzeichnet dass**
- die Leistungskontaktstifte (18) und die Frontplatte (21) sind derart lösbar verbunden, dass die Leistungskontaktstifte (18) ausgetauscht werden können,
- die Kabel (22) und die Kontaktstiftaufnahmen (24, 29) stehen in einer nicht lösbaren Verbindung (23),
- die Kontaktstiftaufnahmen (24, 29) und die Kontaktstifte (14, 15, 16, 18) stehen in einer lösbaren Verbindung (25),
- die Kontaktstiftaufnahmen (24, 29) umfassen Signalkontaktstiftaufnahmen (29) und Leistungskontaktstiftaufnahmen (24),
- die Kontaktschale (31) trägt die Leistungskontaktstiftaufnahmen (24) und
- die Signalkontaktstifte (14, 16) sind stirnseitig in den Isolierkörper (12) eingesetzt.

2. Ladestecker (10) nach Anspruch 1, **gekennzeichnet durch** folgende Merkmale:
- die Kontaktstifte (14, 15, 16, 18) weisen dem Ladestecker (10) zugewandte Kontaktpunkte (17) auf und
- die Kontaktpunkte (17) definieren eine vorgesehene Trennebene (32) zwischen dem Steckerkopf (11) und dem Isolierkörper (12).

3. Ladestecker (10) nach Anspruch 1 oder 2, **gekennzeichnet durch** folgendes Merkmal:
- die Kontaktstifte (14, 15, 16, 18) sind im Isolierkörper (12) angeordnet und
- die Kontaktstifte (14, 15, 16, 18) tragen Dichtringe (19).

4. Ladekabel (10) nach einem der vorangehenden Ansprüche, **gekennzeichnet durch** folgendes Merkmal:
- der Ladestecker (10) weist einen Zusatzhandgriff (30) auf.

5. Ladestecker (10) nach einem der vorangehenden Ansprüche, **gekennzeichnet durch** folgendes Merkmal:
- der Ladestecker (10) weist Schraubverbindungen (13), Klemmfedern oder Niete zwischen dem Steckerkopf (11) und dem Isolierkörper (12) auf.

6. Verfahren zur Herstellung eines Ladesteckers (10) nach einem der vorangehenden Ansprüche, **gekennzeichnet durch** folgende Merkmale:
- die Signalkontaktstifte (14, 16) werden mit Sprengringen (26) in den Isolierkörper (12) montiert (27) und
- die Leistungskontaktstifte (18) werden auf die Kontaktstiftaufnahmen (24, 29) im Steckerkopf (11) montiert (28).

## Claims

1. Charging plug (10) for an electric automobile,
- the charging plug (10) comprising a plug head (11), an insulation body (12) and contact pins (14, 15, 16, 18),
- the plug head (11) and the insulation body (12) being releasably connected in such a way that the insulation body (12) can be exchanged,
- the contact pins (14, 15, 16, 18) comprising signal contact pins (14, 16), a protective earth pin (15) and power contact pins (18),
- the plug head (11) having a housing (20) with a front plate (21),having cables (22), having contact pin receptacles (24, 29) and having a contact shell (31),
**characterized in that**
- the power contact pins (18) and the front plate (21) are releasably connected in such a way that the power contact pins (18) can be exchanged,
- the cables (22) and the contact pin receptacles (24, 29) are in non-releasable connection. (23),
- the contact pin receptacles (24, 29) and the contact pins (14, 15, 16, 18) are in releasable connection (25),
- the contact pin receptacles (24, 29) comprise signal contact pin receptacles (29) and power contact pin receptacles (24),
- the contact shell (31) bears the power contact pin receptacles (24), and
- the signal contact pins (14, 16) are inserted into the insulation body (12) at an end side.

2. Charging plug (10) according to Claim 1, **characterized by** the following features:
- the contact pins (14, 15, 16, 18) have contact points (17) facing the charging plug (10), and
- the contact points (17) define an intended separating plane (32) between the plug head (11) and the insulation body (12).

3. Charging plug (10) according to Claim 1 or 2, **characterized by** the following feature:
- the contact pins (14, 15, 16, 18) are arranged in the insulation body (12), and
- the contact pins (14, 15, 16, 18) bear sealing rings (19).

4. Charging cable (10) according to one of the preceding claims,
**characterized by** the following feature:
- the charging plug (10) has an auxiliary handle (30).

5. Charging plug (10) according to one of the preceding claims,
**characterized by** the following feature:
- the charging plug. (10) has screw connections (13), clamping springs or rivets between the plug head (11) and the insulation body (12).

6. Method for producing a charging plug (10) according to one of the preceding claims,
**characterized by** the following features:
- the signal contact pins (14, 16) are fitted (27) into the insulation body (12) with circlips (26), and
- the power contact pins (18) are fitted (28) onto the contact pin receptacles (24, 29) in the plug head (11).

## Revendications

1. Prise de recharge (10) pour voiture électrique,
- la prise de recharge (10) comprenant une tête de prise (11), un corps isolant (12) et des broches de contact (14, 15, 16, 18),
- la tête de prise (11) et le corps isolant (12) étant reliés de manière amovible de telle sorte que le corps isolant (12) puisse être échangé,
- les broches de contact (14, 15, 16, 18) comprenant des broches de contact de signal, (14, 16), une terre de protection (15) et des broches de contact de puissance (18),
- la tête de prise (11) comportant un boîtier (20) doté d'une plaque frontale (21), de câbles (22), de réceptacles de broches de contact (24, 29) et d'une coque de contact (31),
**caractérisée en ce que**
- les broches de contact de puissance (18) et la plaque frontale (21) sont reliées de manière amovible de telle sorte que les broches de contact de puissance (18) puissent être échangées,
- les câbles (22) et les réceptacles de broches de contact (24, 29) sont reliés par une liaison non amovible (23),
- les réceptacles de broches de contact (24, 29) et les broches de contact (14, 15, 16, 18) sont reliés par une liaison amovible (25),
- les réceptacles de broches de contact (24, 29) comprennent des réceptacles de broches de contact de signal (29) et des réceptacles de broches de contact de puissance (24),
- la coque de contact (31) porte les réceptacles de broches de contact de puissance (24) et
- les broches de contact de signal (14, 16) sont insérées côté face avant dans le corps'isolant (12).

2. Prise de recharge (10) selon la revendication 1, **caractérisée par** les caractéristiques suivantes :
- les broches de contact (14, 15, 16, 18) présentent des points de contact (17) situés en face de la prise de recharge (10) et
- les points de contact (17) définissent un plan de séparation prévu (32) entre la tête d'enfichage (11) et le corps isolant (12).

3. Prise de recharge (10) selon la revendication 1 ou 2,
**caractérisée par** la caractéristique suivante :
- les broches de contact (14, 15, 16, 18) sont disposées dans le corps isolant (12) et
- les broches de contact (14, 15, 16, 18) portent des bagues d'étanchéité (19).

4. Câble de recharge (10) selon l'une des revendications précédentes,
**caractérisé par** la caractéristique suivante :
la prise de recharge (10) est dotée d'une partie de préhension supplémentaire (30).

5. Prise de recharge (10) selon l'une des revendications précédentes,
**caractérisée par** la caractéristique suivante :
- la prise de recharge (10) est dotée de raccords' à vis (13), de ressorts de serrage ou de rivets entre la tête d'enfichage (11) et le corps isolant (12).

6. Procédé de fabrication d'une prise de recharge (10) selon l'une des revendications précédentes,
**caractérisé par** les caractéristiques suivantes :
- les broches de contact de signal (14, 16) sont montées (27) dans le corps isolant (12) au moyen de bagues d'arrêt (26) et
- les broches de contact de puissance (18) sont montées (28) sur les réceptacles de broches de contact (24, 29) dans la tête d'enfichage (11).
